(19) **Europäisches Patentamt**
**European Patent Office**
**Office européen des brevets**

(11) **EP 4 438 999 B1**

(12) **FASCICULE DE BREVET EUROPEEN**

(45) Date de publication et mention
de la délivrance du brevet:
**11.03.2026 Bulletin 2026/11**

(21) Numéro de dépôt: **24165799.8**

(22) Date de dépôt: **25.03.2024**

(51) Classification Internationale des Brevets (IPC):
**G01B 5/00** (2006.01) **G01B 11/27** (2006.01)
**G04D 1/00** (2006.01) **B23Q 17/22** (2006.01)
**B25J 13/08** (2006.01) **G01B 21/04** (2006.01)
**G04D 7/00** (2006.01)

(52) Classification Coopérative des Brevets (CPC):
**G01B 5/0014; B23Q 17/2275; B25J 13/08;**
**G01B 11/272; G01B 21/042; G04D 1/0014;**
**G04D 1/0092;** G04D 7/004

(54) **MACHINE D'ASSEMBLAGE AVEC SYSTÈME DE RÉFÉRENCE OPTIQUE**

MONTAGEMASCHINE MIT OPTISCHEM REFERENZSYSTEM

ASSEMBLY MACHINE WITH OPTICAL REFERENCE SYSTEM

(84) Etats contractants désignés:
**AL AT BE BG CH CY CZ DE DK EE ES FI FR GB**
**GR HR HU IE IS IT LI LT LU LV MC ME MK MT NL**
**NO PL PT RO RS SE SI SK SM TR**

(30) Priorité: **30.03.2023 CH 3512023**

(43) Date de publication de la demande:
**02.10.2024 Bulletin 2024/40**

(73) Titulaire: **Ciposa SA**
**2068 Hauterive (CH)**

(72) Inventeurs:
• **Liechti, Nicolas**
**2300 La Chaux-de-Fonds (CH)**
• **Vidal, Nicola**
**2525 Le Landeron (CH)**
• **Chautems, Nicolas**
**1789 Lugnorre (CH)**

(74) Mandataire: **P&TS SA (AG, Ltd.)**
**Avenue J.-J. Rousseau 4**
**P.O. Box 2848**
**2001 Neuchâtel (CH)**

(56) Documents cités:
**CH-A2- 718 688 US-A1- 2021 302 916**

• **REINHART G ET AL: "FLEXIBLE MONTAGE VON**
**MINIATURBAUTEILEN", F & M**
**FEINWERKTECHNIK MIKROTECHNIK**
**MIKROELEKTRONIK, HANSER, MUNCHEN, DE,**
**vol. 105, no. 1/02, 1 January 1997 (1997-01-01),**
**pages 43 - 45, XP000721640, ISSN: 1437-9503**
• **SANG MIN YI ET AL: "Mechanical punching of 15**
**[mu]m size hole", MICROSYSTEM**
**TECHNOLOGIES ; MICRO AND NANOSYSTEMS**
**INFORMATION STORAGE AND PROCESSING**
**SYSTEMS, SPRINGER, BERLIN, DE, vol. 12, no.**
**9, 31 March 2006 (2006-03-31), pages 877 - 882,**
**XP019429629, ISSN: 1432-1858, DOI: 10.1007/**
**S00542-006-0146-7**

## Description

### Domaine technique

La présente invention concerne une machine d'assemblage adaptée au micro-assemblage de différentes pièces, en particulier dans le domaine de l'horlogerie. Plus particulièrement, la présente invention concerne un système de référencement permettant d'adapter facilement une telle machine à une application particulière, ou de transférer aisément sur une telle machine une application déjà préparée sur une autre machine semblable ou identique. La présente invention couvre en outre une méthode de référencement au moyen d'une telle machine.

### Etat de la technique

Dans le domaine du micro-assemblage, plusieurs composants sont manipulés de sorte à être assemblés avec une précision de l'ordre du micromètre. De multiples paramètres sont susceptibles de contrarier une telle précision, parmi lesquels les éléments structurels de la machine utilisée pour l'assemblage, mobiles les uns par rapport aux autres. En l'occurrence, les éléments à assembler sont déplacés entre plusieurs stations, ayant des fonctions différentes, au moyen de dispositifs de préhension qui permettent de prendre ces différents éléments, de les déplacer et de les positionner précisément. La mise en place d'une application nécessite de nombreux réglages souvent spécifiques d'une machine. Il en résulte une immobilisation de la machine pour une durée significative, pouvant être de plusieurs jours, avant de pouvoir produire une série de pièces assemblées, également connues sous le terme d'assemblages.

Ces limitations sont d'autant plus significatives que les séries généralement fabriquées sont des moyennes ou petites séries. Les temps de réglage et d'ajustage de la machine entachent les rendements de manière significative. En outre, les machines sont adaptées pour plusieurs applications possibles, pouvant inclure différents modules ou stations, ce qui nécessite de prévoir des réglages pour des applications totalement différentes en fonction des besoins. Pour que la flexibilité ainsi offerte par de telles machines reste effective, il convient de ne pas trop entacher la rentabilité par des temps de réglages trop long et fastidieux.

Un autre aspect concerne le transfert d'une application élaborée sur une première machine vers une autre machine identique ou similaire. Dans ce cas, les réglages de la première machine peuvent ne pas être transposables directement vers la seconde, notamment parce que les positions relatives des différentes parties des machines ne coïncident pas forcément. En conséquence, un effort supplémentaire de réglage est nécessaire.

Les machines de micro-assemblage sont généralement pourvues de systèmes de référencement de type mécanique, comprenant par exemple des palpeurs ou des axes de centrage. Le document US2021/0302916A1 mentionne une machine d'assemblage de composants horlogers et de leur réglages. Le document CH718688A2 décrit une machine et un procédé de micro-usinage de pièce présentant une surface de révolution. La publication « flexible montage von miniaturbauteilen » F&M Feinwertechnik Mikrotechnik Mikroelektronik, Hanser, Munche (Vol.105, N°1/02, 1 janvier 1997, décrit un procédé d'assemblage de composant horlogers. Cependant, de tels systèmes ne permettent pas de correction automatique d'éventuels décentrages, dus par exemple aux variations structurelles de la machine.

Allier flexibilité et précision représente donc un défi particulier.

### Bref résumé de l'invention

Un but de la présente invention est de proposer une machine de micro-assemblage pouvant procéder à de multiples opérations d'assemblage et/ou à de multiples applications, avec des tolérances de l'ordre du micromètre, et dont les réglages sont facilités, ou peuvent être au moins en partie automatiques, de sorte à limiter ou éviter toute intervention manuelle liée aux réglages.

Un autre but de l'invention est de proposer une machine de micro assemblage adaptée pour ajuster de manière au moins partiellement automatique, de préférence totalement automatique, les paramètres d'une application effectuée sur une autre machine, de sorte à pouvoir transférer aisément les opérations d'assemblage d'une machine à l'autre.

Un autre but de la présente invention est de proposer une méthode permettant de faciliter les réglages d'une machine de micro-assemblage et/ou leur transfert vers une autre machine de micro-assemblage.

Un autre but de la présente invention est de proposer une méthode de micro-assemblage permettant de corriger d'éventuelles dérives de manière automatique, de préférence totalement automatique, lors de la production de séries de pièces sur une machine donnée. Un autre but de la présente invention est de proposer une méthode de micro-assemblage flexible permettant de changer de machine en cours de production avec un minimum de temps de réglage et/ou de perte de rentabilité et/ou sans perte de qualité des pièces produites.

Selon l'invention, ces buts sont atteints notamment au moyen de l'invention objet des revendications indépendantes et détaillée dans les revendications qui en dépendent.

Cette solution présente notamment l'avantage par rapport à l'art antérieur de limiter les durées d'immobilisation des machines de micro-assemblage lors de leurs réglages, soit pour initialiser une nouvelle production, soit pour y transférer une production déjà entamée sur une autre machine.

**Brève description des figures**

Des exemples de mise en œuvre de l'invention sont indiqués dans la description illustrée par les figures suivantes :

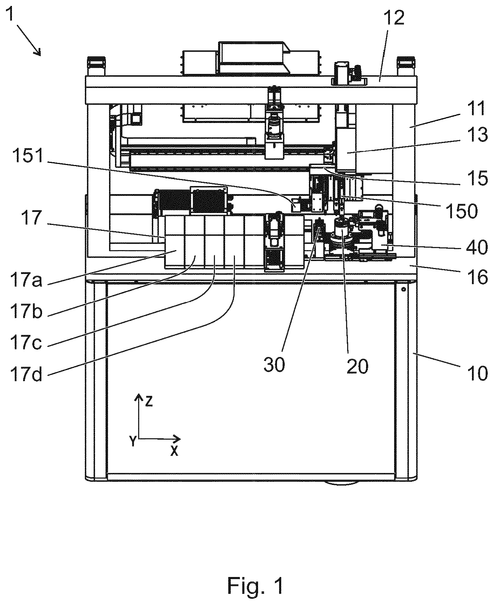

- Figure 1 : vue en perspective de la machine selon un exemple de la présente invention en position de manipulation sur outil d'assemblage,

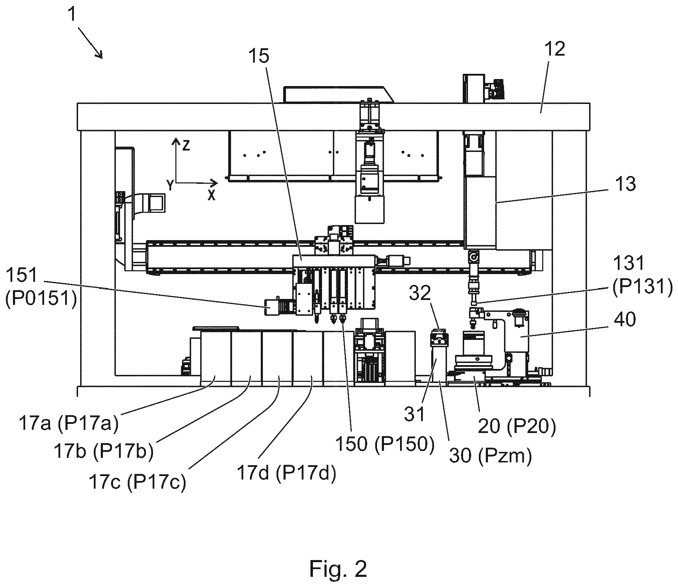

- Figure 2 : vue de face de la machine selon un exemple de la présente invention en position d'assemblage,

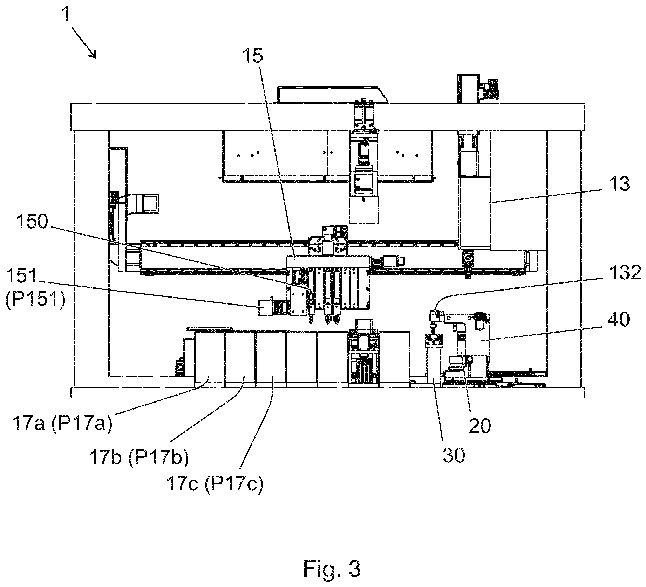

- Figure 3: vue de face de la machine selon un exemple de la présente invention où le second porte-outil est en position de référencement,

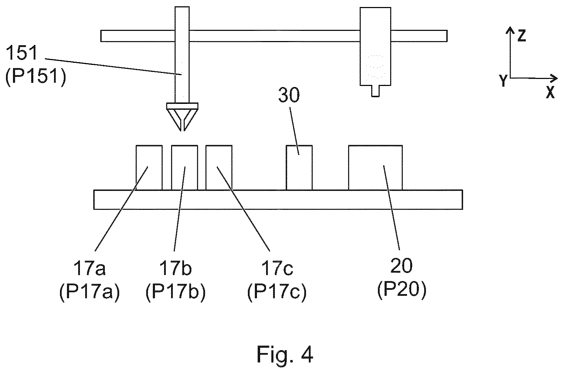

- Figure 4: Représentation schématique de la machine selon un mode de réalisation de la description,

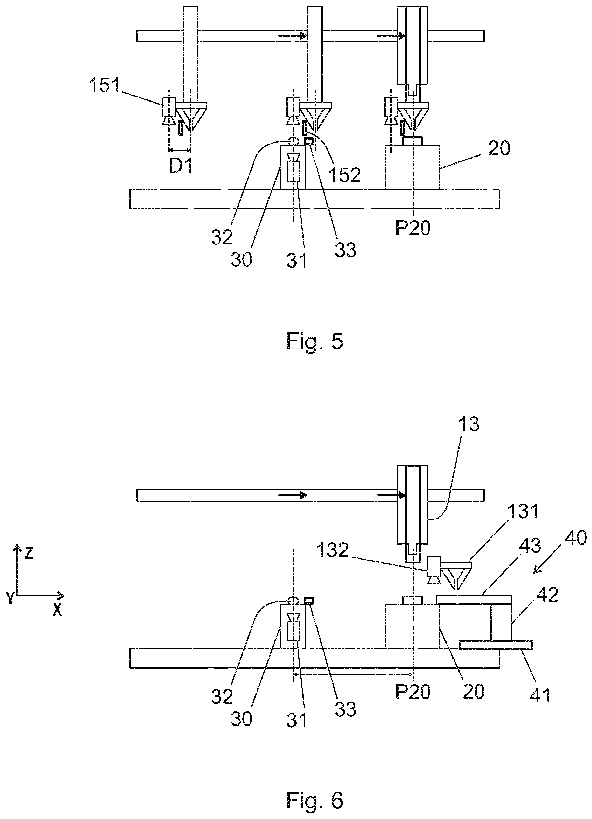

- Figure 5 : Représentation schématique de détails de la machine selon un mode de réalisation de la présente description,

- Figure 6 : Représentation schématique de détails de la machine selon un autre mode de réalisation de la présente description,

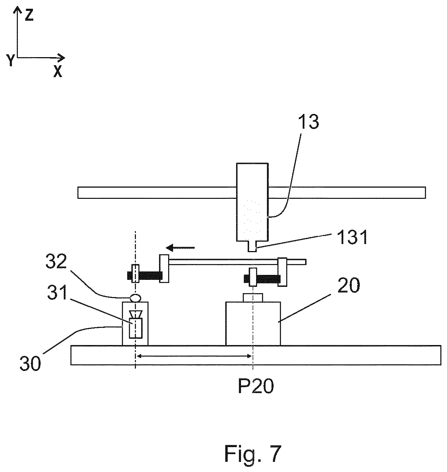

- Figure 7 : Représentation schématique du positionnement du portique d'assemblage de la machine selon un mode de réalisation de la présente description

**Exemple(s) de mode de réalisation de l'invention**

Une machine de micro-assemblage **1** selon la présente description comporte un socle **10** sur lequel repose le plan de travail **16** et une ou plusieurs poutres **11** soutenant un portique **12** et un ensemble **17** d'une ou plusieurs stations de travail **17a, 17b, 17c, 17d** disposées par exemple sur le plan de travail **16** et/ou à proximité. Elle comprend en outre une station d'assemblage **20,** où sont assemblées les différentes pièces. La station d'assemblage est surmontée des outils de presse **131** adéquats et d'un actionneur **13** permettant d'assembler les pièces. La station d'assemblage **20** et l'actionneur **13** sont également connus sous le terme de « presse ». La machine de micro-assemblage **1** comprend au moins un chariot **15** ou porte-outils suspendu au portique **12** et mobile selon les axes x, y et z, et comprenant un ou plusieurs outils de manipulation **150** permettant de manipuler les pièces en cours de production.

Elle comprend également une unité de commande (non représentée) permettant au moins l'une des opérations parmi celles de piloter les mouvements du chariot **15** le long des axes x, y et z selon des paramètres préétablis, sélectionner et/ou activer un ou plusieurs outils de manipulation **150,** gérer l'approvisionnement d'une ou plusieurs station **17a, 17b, 17c, 17d** ou d'autres opérations. L'unité de commande est en outre adaptée pour collecter des données issues d'un ou plusieurs capteurs de la machine de micro-assemblage **1,** en particulier des coordonnées ou des données de position selon les axes x, y, z, notamment relatives à la position des outils ou de porte-outils ou de pièces en production, ou des stations de travail. L'unité de commande est avantageusement adaptée pour établir automatiquement des points de référence et/ou pour corriger automatiquement une ou plusieurs des données qu'elle reçoit, soit via des capteurs de la machine, soit via un opérateur. En particulier, les corrections apportées par l'unité de commande concernent d'éventuelles dérives par rapport à des coordonnées initiales. L'unité de commande comporte ou est connectée à au moins une interface homme-machine, telle que clavier, écran, écran tactile, et équivalent comprenant les moyens d'exploitation nécessaires tels que logiciels de commande. Un utilisateur peut ainsi élaborer une application via l'unité de commande.

La machine de micro-assemblage **1** décrite ici comprend un système de référencement permettant de localiser précisément selon les axes x, y et z, un ou plusieurs des éléments parmi les outils **150,** porte outils **15,** stations **17a, 17b, 17c, 17d,** incluant la station d'assemblage **20,** et pièces en cours de production.

Le système de référencement comprend à cet effet une base de référencement **30,** permettant notamment de définir l'origine de l'ensemble des coordonnées nécessaires aux applications de la machine de micro-assemblage **1.** La base de référencement **30** comporte au moins un dispositif optique fixe **31** et au moins une mire **32** disposée dans le champs de détection du dispositif optique fixe **31.** Le dispositif optique fixe **31** peut désigner tout dispositif de détection optique adéquat tel qu'une caméra, une détection laser ou tout équivalent. Sa position est définie par défaut et reste inchangée quelle que soit l'opération de la machine de micro-assemblage **1.** La base de référencement **30** est par exemple intégrée ou fixée à la table de travail **16.** La mire **32** désigne tout objet optique dont la position et/ou l'orientation peuvent être détectées au moins par le dispositif optique fixe **31.** Selon un mode de réalisation, la mire **32** est un objet bidimensionnel tel qu'un disque comprenant un point de référence identifiable par le dispositif optique fixe **31.** Selon un mode de réalisation, la mire **32** est un objet bidimensionnel tel qu'un disque comprenant plus d'un point de référence identifiable par le dispositif optique fixe **31,** permettant ainsi de détecter d'éventuelles dérives angulaires. Elle peut comporter par exemple plus d'une centaine ou plus de 300 ou plus de 500 points de référence. La mire **32** peut être amovible ou rétractable de sorte à pouvoir être présentée au niveau de la base de référencement **30,** dans le champs de détection du dispositif optique fixe **31** et retirée de la base de référencement **30.** Présenter la mire au niveau de la base de référencement **30** permet par exemple une opération de calibrage de la machine. Son retrait laisse ensuite l'espace libre pour la manipulation des pièces à assembler.

Le système de référencement comprend un dispositif optique embarqué **151,** disposé sur un élément mobile de la machine de micro-assemblage **1.** Avantageusement, le dispositif optique embarqué **151** est disposé sur le chariot **15** et orienté de sorte à ce que la mire **32** s'inscrive dans son champs de détection à l'une de ses positions selon le plan x, y. Le dispositif optique embarqué **151** désigne tout dispositif de détection optique adéquat tel qu'une caméra, une détection laser ou tout équivalent, pouvant être identique ou différent du dispositif optique fixe.

Le dispositif optique fixe **31** est orienté selon l'axe z, dirigé vers le haut, et la mire **32,** également fixe, est disposée au-dessus de lui dans son champ de détection, de sorte que le point de référence de la mire, ou au moins une partie des points de référence de la mire le cas échéant, soient identifiables par le dispositif optique fixe **31.** Le dispositif optique embarqué **151** est orienté selon l'axe z, dirigé vers le bas, a une hauteur permettant de surplomber la mire **32** et de la détecter. Lorsque le dispositif optique embarqué **151** est en position de détecter la mire **32,** il se trouve dans l'axe du dispositif optique fixe **31.** A cette position, d'éventuels défauts d'alignement ou de positionnement entre les dispositifs optiques fixe **31** et embarqué **151** par rapport à la mire **32** peuvent être identifiés. Il est entendu que lorsque la mire **32** est disposée au niveau de la base de référencement **30,** le ou les points de références sont détectables simultanément par les dispositifs optiques fixe **31** et embarqué **151.**

La base de référencement **30** permet ainsi de définir l'origine des coordonnées dans le plan x, y grâce aux dispositifs optiques fixe **31,** embarqué **151** et à la mire **32.** La base de référencement **30** peut en outre comporter un palpeur **33,** fixe, pouvant être mis en contact avec un détecteur **152** disposé sur un élément mobile de la machine de micro-assemblage **1,** tel que le porte outils **15.** La position correspondante selon l'axe z de l'élément mobile est identifiée comme l'origine des coordonnées selon l'axe z. Bien que le palpeur **33** soit avantageusement disposé sur la base de référencement **30,** il peut être disposé à une autre position fixe de la machine de micro-assemblage **1,** comme par exemple au niveau de la presse ou d'une station.

Selon un mode de réalisation avantageux, la base de référencement **30** est disposée à proximité de la presse **20,** soit de l'ordre de quelques centimètres, comme par exemple de 30 à 100 mm, ou de 40 à 80 mm ou de 50 à 60 mm. La distance minimale entre la presse **20** et la base de référencement est déterminée essentiellement par l'encombrement des matériels. La plus faible distance entre les deux est la plus avantageuse. La précision de positionnement des outils **150** au niveau de la presse **20** est alors maximale pour une distance moindre, permettant de limiter les éventuelles déformations thermiques.

La position **P20** de la presse **20** par rapport à la base de référencement **30** peut être définie comme indiqué plus loin pour chacune des stations **17x** de la machine micro-assemblage **1.**

Le dispositif optique embarqué **151** est disposé à une distance **D1** d'un outil considéré sur le porte outils **15.** La distance **D1** correspond à l'offset de l'outil considéré par rapport au dispositif optique embarqué **151.** Dans le cas où plusieurs outils **150x** sont disposés sur le porte outils **15,** ils peuvent être chacun associé à un offset **D1x** particulier. Ainsi, lorsque la position du dispositif embarqué **151** est déterminée, par exemple au niveau de la mire **32,** les positions des différents outils **150x** du porte outils **15** peuvent en être automatiquement déduites grâce aux valeurs **D1x** correspondantes. D'autres variables peuvent néanmoins être impliquées dans la détermination de la position des outils.

La machine de micro-assemblage **1** peut en outre comporter un second chariot ou porte-outil **40,** disposé à proximité de la presse **20.** Ce second porte outil **40** permet de compléter les opérations effectuées à l'aide du porte outils **15.** Alternativement ou en plus, le second porte outils **40** peut maintenir l'outil de presse **131** indépendant de l'actionneur **13.** Le second porte-outils **40** comporte un socle **41** pouvant être déplacé de manière contrôlée selon les axes x et y sur le plan de travail **16.** Il comporte en outre un support **42** soutenant une table d'outillage **43** adaptée au maintien et au positionnement des outils de presse **131** au niveau de la presse **20.** Le positionnement des outils de presse **131** est de préférence déterminé par triangulation, ce qui permet de limiter le nombre de capteurs installés sur la machine.

Pour les besoins de la présente description, une station désigne tout dispositif propre à manipuler des pièces ou des sous-ensembles visant à alimenter le procédé d'assemblage, à traiter des pièces intermédiaires, à transférer ou conditionner les différentes pièces ou sous-ensembles résultants du procédé d'assemblage, ou à effectuer des tâches d'entretien ou de contrôle. A titre d'exemple, les stations désignent des systèmes de distribution, tels que des distributions de pièces en vrac, des systèmes de mise en conditionnement de sortie, ou des système de contrôle de pièces. Le type et le nombre de stations dépend des applications désirées.

Pour les besoins de la présente description, une application désigne une suite d'opérations visant à produire un assemblage sur la base de pièces indépendantes. Une application implique au moins une opération au niveau d'au moins une station, telle que l'alimentation en pièces détachées ou leur traitement, au moins une opération de manipulation de telles pièces détachées au moyen d'outils de manipulations spécifiques, et une opération d'assemblage, au niveau de la station d'assemblage. Les manipulations des pièces en cours de production nécessitent des déplacements selon les coordonnées x, y, et z, lesquels peuvent être spécifiques des applications considérés. Ils doivent être rigoureusement contrôlés et reproductibles. L'ensemble des opérations constituant une application peut être désigné par le terme de recette.

Les outils de manipulation désignent tout outil adapté à la préhension, au déplacement, au posage des pièces en cours de production. Ils peuvent prendre la forme de pinces, de dispositifs aspirants, ou tout autre dispositif spécifique des pièces à manipuler et des applications.

Les sources de décentrage sont multiples. Elles peuvent résulter de variations de températures, de l'usure des outils, de leur décentrage, de leur changement de positionnement notamment après leur remplacement, ou d'autres facteurs. Elles concernent toutes les parties de la machine, telles que le positionnement des différentes stations, incluant la station d'assemblage **20,** le positionnement du porte-outils **15** et/ou de ses outils **151.**

Selon un mode de réalisation, une ou plusieurs des stations **17a, 17b, 17c, 17d,** incluant la station d'assemblage **20,** peut être pourvue d'un dispositif d'identification et/ou de localisation optique. En particulier, un tel dispositif est avantageusement identifiable au moins par le dispositif optique embarqué **151** lorsqu'il se trouve en position adéquate. Le dispositif d'identification et/ou de localisation optique permet ainsi au dispositif optique embarqué **151** de localiser la station considérée, de l'identifier, ou d'effectuer une combinaison de ces deux opérations. Il peut prendre la forme d'une mire comprenant un point de référence, voir plusieurs. Elle peut être semblable à la mire **32** de la base de référencement ou de nature différente. Un éventuel décentrage **D17x,** explicité plus loin, de la station considérée peut ainsi être détectée et automatiquement corrigé.

La présente description couvre également une méthode de référencement applicable à une machine de micro-assemblage telle que décrite ici. La présente méthode de référencement se base en particulier sur une référence de base optique comme indiqué plus haut. Elle comprend une étape de détermination d'une position de référence **Pzm** correspondant au zéro machine. Le zéro machine détermine l'élément central du système de référencement et correspond au centre optique du dispositif optique fixe **31.** La détermination du zéro machine comprend l'identification de la mire **32** par le dispositif optique embarqué **151,** décrit plus haut, la mire **32** étant simultanément détectée par le dispositif optique fixe **31.** Un éventuel décentrage **D151** par rapport à la mire détecté par le dispositif optique embarqué **151** est ainsi déterminé. Un éventuel décentrage **D31** par rapport à la mire **32** détecté par le dispositif optique fixe **31** est également déterminé. La position **P0xy** correspond aux coordonnées x, y, du système d'axes portant le porte-outils **15,** lorsque le dispositif optique embarqué **151** est focalisé sur la mire **32.** La position du zéro machine **Pzm** correspond alors à la position du système d'axe corrigée des éventuels décentrages **D151** et **D31.** La position du zéro machine est calculée selon l'équation **E1:**

$$(E1) \qquad Pzm = P0xy + D151 - D31$$

dans laquelle :

- Pzm représente la position zéro machine,

- P0xy représente la position du système d'axe lorsque le dispositif optique embarqué 151 est focalisé sur la mire,

- D151 représente le décentrage détecté par le dispositif optique embarqué 151 par rapport à la mire 32, et

- D31 représente le décentrage détecté par le dispositif optique fixe 31 par rapport à la mire 32.

Les valeurs **D151** et **D31** peuvent varier en fonction du temps, par exemple lors des variations de température. L'application de l'équation **E1** permet alors d'effectuer les corrections d'éventuelles dérives au cours du temps.

Le système d'axes désigne ici les éléments structurels de la machine de micro-assemblage **1** permettant les mouvements et les positionnements des parties mobiles telles que le porte outils **15.** La position du système d'axes correspond à leur intersection dans le plan x, y ou dans le référentiel tridimensionnel x, y, z le cas échéant.

L'étape de détermination du zéro machine **Pzm** est de préférence effectuée de manière automatique. En l'occurrence, l'unité de commande peut placer le dispositif optique embarqué **151** au dessus de la mire **32** et déterminer l'éventuel décentrage **D151** correspondant, ainsi que la position **P0Xxy** correspondante. L'unité de commande peut également déterminer un éventuel décentrage **D31** du dispositif optique fixe **31** et calculer automatiquement la valeur du zéro machine **Pzm**.

La méthode de référencement comporte une étape de détermination automatique d'au moins une position de manipulation **P150x** correspondant aux coordonnées x, y et z d'un outil donné **150x** au dessus d'une station **17x** donnée pour une application donnée **Ax.** Une telle position est déterminées sur la base de la position du dispositif embarqué **151** au dessus de la station considérée, de son offset par rapport à l'outils **150x** considéré et de l'offset spécifique de l'application considéré, selon l'équation **E2**:

$$(E2) \qquad P150x = P151 + D1x + Dax$$

dans laquelle

- P150x désigne la position d'un outil de manipulation 150 donné dans le référentiel x, y, z,

- P151 désigne la position du dispositif optique embarqué 151 au dessus de la station considérée,

- D1x désigne l'offset de l'outil considéré 150x par rapport au dispositif optique embarqué 151,

- Dax désigne l'offset spécifique de l'application donnée.

La présente méthode de référencement comporte une étape de détermination automatique de la position d'au moins une station de travail **P17x** qui peut varier avec les variations de température au cours du temps, avec l'effet des tolérances mécaniques qui peuvent varier d'une machine à une autre, et de l'application considérée. La position d'une station de travail **17x** est obtenue au moyen du dispositif optique embarqué **151,** sur la base de la position **Pzm** du zéro machine, du déplacement **P0151** du dispositif optique embarqué **151** dans le référentiel x, y lorsque lorsqu'il est au-dessus de la station **17x** considérée, et d'un éventuel offset **D17x** du dispositif optique embarqué **151** par rapport à la station **17x** considérée. Cet offset peut être lié à l'application au niveau de la station **17x** considérée par l'équation (E3):

$$(E3) \qquad P17x = Pzm + P0151 + D17x$$

Dans laquelle

- P17x désigne la position de la station 17x considérée dans le référentiel x,y,

- Pzm désigne le zero-machine tel que défini dans (E1),

- P0151 désigne le déplacement du dispositif optique embarqué 151 dans le référentiel x,y par rapport à la position Pzm correspondant au zero-machine,

- D17x désigne l'offset du dispositif embarqué 151 par rapport à la station 17x considérée.

La position **P20** de la station d'assemblage **20** peut être déterminée selon la même équation (E3), considérant l'offset **D20** correspondant. La présente méthode de référencement comporte une étape de détermination de l'offset **D1x** d'un outil **150x** donné par rapport au dispositif optique embarqué **151.** Cette dimension peut varier en fonction de la température, de l'usure de l'outil ou de son remplacement. Le système d'axes est déplacé de sorte à positionner l'outil considéré **150x** dans le champ de détection du dispositif optique fixe **31**. L'outil **150x** est alors à une position de référence **P0150x.** Le dispositif optique fixe **31** détecte et/ou identifie l'outil en question **150x** et détermine un éventuel décentrage **D150x** de l'outil par rapport au dispositif optique fixe **31**. Ce décentrage peut être effectué au moyen de la mire **32** et de son point de référence ou de ses multiples points de référence le cas échéant. L'offset **D1x** de l'outil considéré **150x** est déterminé selon l'équation **E4**:

$$(E4) \qquad D1x = P0150x + D150x$$

dans laquelle

- D1x désigne l'offset de l'outil 150x considéré par rapport au dispositif optique embarqué 151,
- P0150x désigne la position du système d'axes lorsque l'outil 150x est placé dans le champ de détection du dispositif optique fixe 31,

- D150x désigne le décentrage de l'outil considéré 150x par rapport au zéro-machine.

Le système de référencement permet de déterminer une position de manipulation corrigée **PC150x** par rapport à la position de manipulation **P150x** déterminée plus haut, prenant en considération l'un ou plusieurs des paramètres parmi l'offset **D1x** de l'outil considéré **150x,** la position de la station de travail **17x** considérée telles que déterminées ci-dessus, ainsi que les différents offsets spécifiques de l'application **Ax** considérée. La position de manipulation corrigée **PC150x** peut être déterminée selon l'équation E5 :

$$\text{(E5)} \qquad PC150x = Pzm + P0151 + D17x + D1x + Dax$$

Dans laquelle

- PC150x désigne une position de manipulation d'un outil 150x corrigée, dans le référentiel x,y,

- Pzm désigne la position de zéro-machine telle définie dans l'équation (E1)

- P0151 désigne le déplacement du dispositif optique embarqué 151 dans le référentiel x,y par rapport à la position Pzm correspondant au zero-machine,

- D17x désigne l'offset du dispositif embarqué 151 par rapport à la station 17x considérée.

- D1x désigne l'offset de l'outil considéré 150x par rapport au dispositif optique embarqué 151.

- Dax désigne l'éventuel décentrage du dispositif optique embarqué 151 en fonction de l'application Ax considérée.

L'équation E5 est équivalente à l'équation E6 :

$$\text{(E6)} \quad PC150x = P0xy + D151 - D31 + P0151 + D17x + P0150x + D150x + Dax$$

Dans laquelle :

- PC150x désigne une position de manipulation d'un outils 150x corrigée, dans le référentiel x,y,

- P0xy représente la position du système d'axe lorsque le dispositif optique embarqué 151 est focalisé sur la mire,

- D151 représente le décentrage détecté par le dispositif optique embarqué 151 par rapport à la mire 32, et

- D31 représente le décentrage détecté par le dispositif optique fixe 31 par rapport à la mire 32.

- P0151 désigne le déplacement du dispositif optique embarqué 151 dans le référentiel x,y par rapport à la position Pzm correspondant au zero-machine,

- D17x désigne l'offset du dispositif embarqué 151 par rapport à la station 17x considérée.

- P0150x désigne la position du système d'axes lorsque l'outil 150x est placé dans le champ de détection du dispositif optique fixe 31,

- D150x désigne le décentrage de l'outil considéré 150x par rapport au zéro-machine.

- Dax désigne l'éventuel décentrage du dispositif optique embarqué 151 en fonction de l'application Ax considérée.

Dans la méthode de référencement décrite ci-dessus, les variables considérées sont soit une position apprise liée à la machine et indépendante de l'application considérée, telle que la position d'une station **17x** ou d'un outil **P150x,** soit une mesure effectuée ou pouvant être effectuée par le système de référencement, telle que la position d'un outil **150** au-dessus du dispositif optique fixe **31,** soit un offset liés à l'application et défini lors de l'élaboration de l'application. En d'autres termes aucune de ces variables n'est liée à la fois à une application et à la machine.

La méthode de référencement décrite plus haute est applicable ou transposable au Positionnement des outils d'assemblage. En l'occurrence, le portique d'assemblage permet de positionner précisément l'outil d'assemblage ou de presse **131** par rapport aux composants déposés sur la table d'outillage **42** par les outils de manipulation **150x.** Selon un mode de réalisation, la station d'assemblage **20** ne comporte pas de caméra de recentrage permettant de se recentrer par rapport aux composants. Le recentrage se fait par triangulation.

La position du portique d'assemblage pour assembler les composants sur la station d'assemblage est connue en se basant sur le déplacement du dispositif optique embarqué **151** sur la station d'assemblage **P020** et d'un offset d'une mesure **D020** correspondante. Ces corrections sont possibles par le fait que les systèmes des axes de manipulation et des axes d'assemblages sont alignés avec une précision suffisante et/ou que les référentiels sont alignés au moyen de mesures dédiées. Les consignes relatives aux axes du portique d'assemblage, transmises à l'unité de commande, peuvent ainsi être différentes des consignes relatives aux axes de manipulation.

L'étape de triangulation permet de déterminer précisément la position **P131** d'un outil d'assemblage **131** au niveau de la station d'assemblage **20,** correspondant à l'application **Ax,** selon l'équation E7 ci-dessous :

$$(E7) \qquad P131 = P13 + D131 + P020 + D020$$

Dans laquelle :

- P131 désigne la position d'un outil d'assemblage 131 dans le référentiel x, y,

- P13 désigne la position du portique d'assemblage 13 sur la base de de référencement optique,

- D131 désigne l'offset de l'outil d'assemblage 131 résultant d'une mesure précédente. D131 prend en considération les éventuels défauts d'outils, les dérives thermiques et les imprécisions de montage.

- P020 désigne le déplacement du dispositif embarqué 151 dans le référentiel x, y, par rapport à la position Pzm correspondant au zero-machine, apprise lors du référencement, vers la station d'assemblage.

- D020 désigne l'offset de la station d'assemblage, résultant d'une mesure précédente.

Comme pour le positionnement du système d'axe de manipulation, cette équation n'intègre que des variables indépendantes de l'application.

Le portique d'assemblage peut désigner l'actionneur **13,** en particulier lorsque l'outil d'assemblage y est associé. Alternativement, le portique d'assemblage peut désigner un second porte outil **40** tel que décrit plus haut.

La présente invention couvre en outre une méthode de micro-assemblage, ou de production de pièces assemblées, au moyen d'une machine telle que décrite ici. La méthode de micro-assemblage comprend une étape d'élaborer une application **Ax** donnée pour assembler des pièces détachées. L'élaboration d'une telle application peut être effectuée en définissant un ensemble de coordonnées de positionnement et de déplacements d'un ou plusieurs éléments de la machine de micro-assemblage **1** tels que les stations de travail **17a, 17b, 17c, 17d,** la station d'assemblage **20,** le ou les outils **150x,** etc. Les coordonnées de positionnement et/ou de déplacement peuvent être implémentées manuellement, par exemple via l'unité de commande.

La méthode de micro-assemblage contient une étape de correction automatique d'au moins une partie des coordonnées de positionnement et de déplacement décrite ci-dessus, au moyen du système de référencement décrit plus haut. La méthode de micro-assemblage comporte l'étape de mise en œuvre de l'application, en incluant des coordonnées automatiquement corrigées. Lors de la mise en œuvre de l'application **Ax** une ou plusieurs étapes de référencement intermédiaire, semblable au référencement décrit plus haut, peuvent être prévues. Le référencement intermédiaire peut être complet, c'est-à-dire tenir compte de tous les décentrages détectables par le système de référencement, incluant le décentrage des dispositifs optique embarqué **151** et fixe **31,** des stations **17x,** y compris de la station d'assemblage **20,** des outils de manipulation **150x** ou d'assemblage **131.** Alternativement, l'étape de référencement intermédiaire peut être partielle et ne concerner qu'une partie de ces paramètres, notamment à des fins de suivi de dérive. Le référencement intermédiaire peut être effectué de manière totalement automatique, de sorte à maintenir une cadence adéquate de la production. De la sorte, les éventuelles dérives liées aux variations de température, à l'usure des outils ou à d'autres paramètres peuvent être corrigés en ligne sans interruption significative de la production.

La présente invention couvre également un procédé de micro-assemblage impliquant plus d'une machine de micro-assemblage telle que décrite ici. Le procédé comprend une étape d'élaboration d'une application **Ax** comme indiqué ci-dessus. L'élaboration de l'application est effectuée sur une première machine de micro-assemblage comme indiqué plus haut. La production peut être mise en œuvre sur cette première machine sur la base de coordonnées automatiquement corrigées, comme indiqué plus haut, ou bien ne pas être mise en œuvre sur cette première machine. Le procédé comporte une étape de transférer les paramètres de l'application **Ax,** en particulier les coordonnées d'entrée utilisées pour l'élaboration de l'application **Ax,** à une seconde machine semblable ou identique. Le procédé comprend l'étape de corriger automatiquement les paramètres de l'application **Ax** en fonction des caractéristiques de la seconde machine. Alternativement, les coordonnées corrigées par la première machine sont transférées. Dans ce cas, la seconde machine corrige automatiquement les coordonnées en fonction des caractéristiques de la seconde machine.

La méthode de micro-assemblage telle que décrite plus haut peut en outre inclure une étape de sélectionner un ou plusieurs outils de presse **131** au moyen d'un second porte outils **40,** de présenter et maintenir ce ou ces outils de presse à une position adéquate au niveau de la station d'assemblage **20,** et d'actionner l'actionneur **13** de sorte à effectuer l'assemblage. Ainsi l'outil de presse **131** reste indépendant de l'actionneur **13,** ce qui permet une meilleure précision et/ou une meilleure reproductibilité des opérations. Dans ce cas, le procédé peut comporter une étape de référencement du ou des outils de presse **131.** Il peut comporter une étape de correction automatique d'éventuelles dérives de position du ou des outils de presse.

**Numéros de référence employés sur les figures**

| | |
|---|---|
| 1 | Machine de micro-assemblage |
| 10 | Socle |
| 11 | mats |
| 12 | portique |
| 13 | actionneur |
| 15 | Porte outils |
| 16 | Plan de travail |
| 17, 17a, 17b, 17c, 17d, 17x | Stations de travail |
| 20 | Station d'assemblage |
| 30 | Base de référencement optique |
| 31 | Dispositif optique fixe |
| 32 | Mire |
| 40 | Second porte-outils |
| 41 | Socle du second porte outils |
| 42 | support |
| 43 | Table d'outillage |
| 131 | Outil de presse |
| 150, 150x | Outils de manipulation |
| 151 | Dispositif optique embarqué |
| P20 | Position de la station d'assemblage |
| D1, D1x | Offset d'un outil par rapport au dispositif optique embarqué |
| D17x | Offset d'une station de travail |
| Pzm | Position zero-machine |
| D151 | Décentrage détecté par le dispositif optique embarqué |
| D31 | Décentrage détecté par le dispositif optique fixe |
| P0xy | Position du système d'axes lorsque le dispositif optique embarqué 151 est au niveau de la mire |
| Ax | Application |
| Dax | Décentrage lié à une application |
| PC150x | Position corrigée de la position d'un outils |
| P0131 | Position du système d'axes lorsque l'outil de presse est placé dans le champ de détection du dispositif optique fixe |
| P131 | Position de l'outil de presse |
| D131 | Décentrage de l'outils de presse |

**Revendications**

**1.** Machine de micro-assemblage (1) comprenant:

     - au moins une station de travail (17a, 17b, 17c, 17d),
     - une station d'assemblage (20) pourvue d'au moins un outil de presse (131) et d'un actionneur (13),

- un porte-outils (15) mobile selon les axes x, y, z, comprenant un ou plusieurs outils de manipulation (150x) et un dispositif optique embarqué (151), et
- un système de référencement comprenant une base de référencement pourvue d'un dispositif optique fixe (31) et d'une mire (32), et
- d'une unité de commande,

où la mire (32) est adaptée pour être disposée dans le champ de détection du dispositif optique fixe (31) et où le porte-outil (15) peut prendre une position dans le plan x, y permettant au dispositif optique embarqué (151) d'identifier la mire (32) et de la localiser, **caractérisée en ce que** l'unité de commande est adaptée pour détecter un éventuel décentrage (D151) du dispositif optique embarqué (151) par rapport à la mire, un éventuel décentrage (D31) du dispositif optique fixe (31) par rapport à la mire ou une combinaison des deux.

2.  Machine de micro-assemblage selon la revendication 1, dans laquelle la au moins une station de travail (17a, 17b, 17c, 17d), et la station d'assemblage (20) comportent un dispositif détectable par le dispositif optique embarqué (151) de sorte à être identifiées et/ou localisées.

3.  Machine de micro-assemblage selon l'une des revendications 1 et 2, dans laquelle le dispositif optique embarqué (151) est disposé à une distance (D1x) du ou des outils (150x) correspondants, pouvant être automatiquement déterminée.

4.  Machine de micro-assemblage selon l'une des revendications 1 et 2, dans laquelle la base de référencement (30) est disposée à une distance de la station d'assemblage (20) inférieure à 100 mm, de préférence inférieure à 80 mm.

5.  Machine de micro-assemblage selon l'une des revendications 1 à 4, la mire (32) comportant au moins un point fixe de référence, identifiable et localisable par l'un ou l'autre ou les deux des dispositifs optiques embarqué (151) et fixe (31).

6.  Machine selon l'une des revendications 1 à 5, ladite mire (32) étant rétractable ou amovible.

7.  Machine selon l'une des revendications 1 à 6, comprenant en outre un second porte-outils (40) mobile au moins selon les axes x, y à proximité de la station d'assemblage (20), adapté au positionnement d'un outil de presse indépendant de l'actionneur (13).

8.  Machine selon la revendication 7, la position dudit second porte-outils (40) étant déterminée par triangulation.

9.  Machine selon l'une des revendications 1 à 8, l'unité de commande étant adaptée pour corriger de manière automatique le positionnement de l'un ou plusieurs de la ou des stations de travail (17a, 17b, 17c, 17d), de la station d'assemblage (20), du porte-outils (15), du second porte-outils (40), des outils de presse et des outils de manipulation (150x), d'un offset (D1x) d'un outil de manipulation, d'un offset (D131) d'un outil de presse, sur la base des décentrages correspondants (D151) et (D31) éventuellement détectés par les dispositifs optiques embarqué et fixe.

10. Procédé de référencement automatique d'une machine de micro-assemblage telle que définie dans l'une des revendications 1 à 8, comprenant une étape de détermination de la position zéro-machine (Pzm) au moyen du dispositif optique fixe (31), du dispositif optique embarqué (151, 132) et de la mire (32), la position zéro-machine (Pzm) tenant compte des décentrages éventuellement détectés par lesdits dispositifs optiques embarqué et fixe de sorte à corriger les éventuelles dérives associées.

11. Procédé de référencements selon la revendication 10, ladite position zéro-machine (Pzm) étant utilisée pour corriger automatiquement d'éventuels écarts dans les déplacements de pièces et/ou d'outils de manipulation (150) et/ou d'outils de presse (131), pour déterminer automatiquement la position d'une station de travail (17x), de la position d'assemblage (20), d'un outil de manipulation (150) ou de presse (131), et/ou pour corriger automatiquement l'usure ou le décentrage d'un outil de manipulation (150) ou de presse (131).

12. Procédé de micro-assemblage au moyen d'une ou plusieurs machines de micro-assemblage selon l'une des revendications 1 à 9, comprenant une étape d'élaborer une application (Ax) sur une première machine de micro-assemblage, une étape de transférer les paramètres de cette application (Ax) à une seconde machine, similaire ou identique et une étape de corriger automatiquement au moins une partie des paramètres transférés en fonctions des caractéristiques de la seconde machine.

**Patentansprüche**

1. Mikromontagemaschine (1) umfassend:

   - mindestens ein Arbeitsplatz (17a, 17b, 17c, 17d),
   - eine Montagestation (20), welche mit mindestens einem Presswerkzeug (131) und einem Aktuator (13) ausgestattet ist,
   - ein Werkzeughalter (15), welcher entlang der x-, y- und z-Achse beweglich ist und ein oder mehrere Handhabungswerkzeuge (150x) sowie eine integrierte optische Vorrichtung (151) umfasst, und
   - ein Referenzsystem, umfassend eine Referenzbasis mit einer festen optischen Vorrichtung (31) und einem Visier (32), und
   - eine Steuereinheit,

   wobei das Visier (32) derart ausgelegt ist, um im Erfassungsbereich der festen optischen Vorrichtung (31) positioniert zu werden, und wobei der Werkzeughalter (15) eine Position in der x, y-Ebene einnehmen kann, was es der integrierten optischen Vorrichtung (151) ermöglicht, das Visier (32) zu identifizieren und zu lokalisieren, **dadurch gekennzeichnet, dass** die Steuereinheit dazu ausgelegt ist, eine mögliche Dezentrierung (D151) der integrierten optischen Vorrichtung (151) in Bezug auf das Visier, eine mögliche Dezentrierung (D31) der festen optischen Vorrichtung (31) in Bezug auf das Visier oder eine Kombination von beiden zu erkennen.

2. Mikromontagemaschine gemäss Anspruch 1, worin die mindestens eine Arbeitsstation (17a, 17b, 17c, 17d) und die Montagestation (20) eine durch die integrierte optische Vorrichtung (151) erkennbare Vorrichtung umfassen, um erkannt und/oder lokalisiert werden zu können.

3. Mikromontagemaschine gemäss einem der Ansprüche 1 und 2, worin die integrierte optische Vorrichtung (151) von dem/den entsprechenden Werkzeug(en) (150x) in einem Abstand (D1x) angeordnet ist, der automatisch bestimmt werden kann.

4. Mikromontagemaschine gemäss einem der Ansprüche 1 und 2, worin die Referenzbasis (30) in einem Abstand von weniger als 100 mm, vorzugsweise weniger als 80 mm, von der Montagestation (20) angeordnet ist.

5. Mikromontagemaschine gemäss einem der Ansprüche 1 bis 4, wobei das Visier (32) mindestens einen festen Bezugspunkt umfasst, der mit der einen oder der anderen oder beiden der integrierten (151) und festen (31) optischen Vorrichtungen identifizierbar und lokalisierbar ist.

6. Maschine gemäss einem der Ansprüche 1 bis 5, wobei das besagte Visier (32) einziehbar oder abnehmbar ist.

7. Maschine gemäss einem der Ansprüche 1 bis 6, zudem umfassend einen zweiten Werkzeughalter (40), welcher in der Nähe der Montagestation (20) mindestens entlang der x- und y-Achse beweglich ist, und welcher für das Positionieren eines Presswerkzeugs unabhängig vom Aktuator (13) ausgelegt ist.

8. Maschine gemäss Anspruch 7, wobei die Position des besagten zweiten Werkzeughalters (40) durch Triangulation bestimmt wird.

9. Maschine gemäss einem der Ansprüche 1 bis 8, wobei die Steuereinheit derart ausgelegt ist, um die Positionierung einer oder mehrerer der einen oder mehreren Arbeitsstationen (17a, 17b, 17c, 17d), der Montagestation (20), des Werkzeughalters (15), des zweiten Werkzeughalters (40), der Presswerkzeuge und der Handhabungswerkzeuge (150x), einer Verschiebung (D1x) eines Handhabungswerkzeugs, einer Verschiebung (D131) eines Presswerkzeugs auf der Grundlage der entsprechenden Verschiebungen (D151) und (D31), welche gegebenenfalls von der integrierten und der festen optischen Geräten erkannt werden, automatisch zu korrigieren.

10. Verfahren zum automatischen Referenzieren einer Mikromontagemaschine wie in einem der Ansprüche 1 bis 8 definiert, umfassend einen Schritt der Bestimmung der Nullposition der Maschine (Pzm) mittels der festen optischen Vorrichtung (31), der integrierten optischen Vorrichtung (151, 132) und des Visiers (32), wobei die Nullposition der Maschine (Pzm) eventuelle, von der besagten integrierten und festen optischen Vorrichtungen erkannte Dezentrierungen berücksichtigt, um damit verbundene Drifts zu korrigieren.

11. Referenzierenverfahren gemäss Anspruch 10, wobei die besagte Nullposition der Maschine (Pzm) dazu dient, eventuelle Abweichungen in den Bewegungen von Teilen und/oder Handhabungswerkzeugen (150) und/oder Presswerkzeugen (131) automatisch zu korrigieren, um die Position einer Arbeitsstation (17x), die Montageposition (20), die Position eines Handhabungswerkzeugs (150) oder eines Presswerkzeugs (131) automatisch zu bestimmen und/oder den Verschleiss oder die Dezentrierung eines Handhabungswerkzeugs (150) oder eines Presswerkzeugs (131) automatisch zu korrigieren.

12. Mikromontageverfahren unter Verwendung einer oder mehrerer Mikromontagemaschinen gemäss einem der Ansprüche 1 bis 9, umfassend einen Schritt der Entwicklung einer Anwendung (Ax) auf einer ersten Mikromontagemaschine, einen Schritt der Übertragung der Parameter dieser Anwendung (Ax) auf eine zweite, ähnliche oder identische Maschine und einen Schritt der automatischen Korrektur mindestens eines Teils der übertragenen Parameter entsprechend den Eigenschaften der zweiten Maschine.

**Claims**

1. Micro-assembly machine (1) comprising:

   - at least one workstation (17a, 17b, 17c, 17d),
   - an assembly station (20) equipped with at least one press tool (131) and an actuator (13),
   - a tool holder (15) movable along the x, y, z axes, comprising one or more handling tools (150x) and an on-board optical device (151), and
   - a referencing system comprising a referencing base equipped with a fixed optical device (31) and a sight (32), and
   - a control unit,

   wherein the sight (32) is adapted to be disposed within the detection field of the fixed optical device (31) and wherein the tool holder (15) can take a position in the x, y plane allowing the on-board optical device (151) to identify the sight (32) and locate it, **characterized in that** the control unit is adapted to detect any misalignment (D151) of the on-board optical device (151) relative to the sight, any misalignment (D31) of the fixed optical device (31) relative to the sight, or a combination of both.

2. Micro-assembly machine according to claim 1, in which the at least one workstation (17a, 17b, 17c, 17d) and the assembly station (20) comprise a device detectable by the on-board optical device (151) so as to be identified and/or located.

3. Micro-assembly machine according to one of claims 1 and 2, wherein the on-board optical device (151) is arranged at a distance (D1x) from the corresponding tool or tools (150x), which can be determined automatically.

4. Micro-assembly machine according to one of claims 1 and 2, wherein the reference base (30) is arranged at a distance from the assembly station (20) of less than 100 mm, preferably less than 80 mm.

5. Micro-assembly machine according to one of claims 1 to 4, the sight (32) comprising at least one fixed reference point, identifiable and locatable by one or both of the on-board (151) and fixed (31) optical devices.

6. Machine according to one of claims 1 to 5, said sight (32) being retractable or removable.

7. Machine according to one of claims 1 to 6, further comprising a second tool holder (40) movable at least along the x and y axes near the assembly station (20), adapted for positioning a press tool independent of the actuator (13).

8. Machine according to claim 7, the position of said second tool holder (40) being determined by triangulation.

9. Machine according to one of claims 1 to 8, the control unit being adapted to automatically correct the positioning of the one or more of the workstation(s) (17a, 17b, 17c, 17d), the assembly station (20), the tool holder (15), the second tool holder (40), the press tools and the handling tools (150x), an offset (D1x) of a handling tool, an offset (D131) of a press tool, based on the corresponding misalignments (D151) and (D31) that may be detected by the on-board and fixed optical devices.

10. Method for automatically referencing a micro-assembly machine as defined in one of claims 1 to 8, comprising a step of determining the machine zero position (Pzm) by means of the fixed optical device (31), the on-board optical device (151, 132) and the sight (32), the machine zero position (Pzm) taking into account any misalignments detected by said onboard and fixed optical devices so as to correct any associated drifts.

11. Referencing method according to claim 10, said machine zero position (Pzm) being used to automatically correct any deviations in the movements of parts and/or handling tools (150) and/or press tools (131), to automatically determine the position of a workstation (17x), the assembly position (20), a handling tool (150) or press tool (131), and/or to automatically correct the wear or misalignment of a handling tool (150) or press tool (131).

12. Micro-assembly method using one or more micro-assembly machines according to any of claims 1 to 9, comprising a step of developing an application (Ax) on a first micro-assembly machine, a step of transferring the parameters of this application (Ax) to a second, similar or identical machine, and a step of automatically correcting at least some of the transferred parameters according to the characteristics of the second machine.

Fig. 1

Fig. 2

Fig. 3

151
(P151)

30

151
(P151)

17a
(P17a)

17b
(P17b)

17c
(P17c)

20
(P20)

Z

Y

X

Fig. 4

Fig. 5

Fig. 6

Fig. 7

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 20210302916 A1

- CH 718688A2

**Littérature non-brevet citée dans la description**

- flexible montage von miniaturbauteilen. F&M Feinwertechnik Mikrotechnik Mikroelektronik, 01 January 1997, vol. 105